# EUROPÄISCHE PATENTSCHRIFT

(11) **EP 0 956 896 B1**
(45) Veröffentlichungstag und Bekanntmachung des Hinweises auf die Patenterteilung: **25.07.2001**
(21) Anmeldenummer: 99108106.8
(22) Anmeldetag: 24.04.1999
(51) Int. Cl.: B01F 5/00, F02M 25/022

(54) **Emulgiervorrichtung**
Device for emulsifying
Dispositif pour produire une émulsion

(30) Priorität: 11.05.1998 DE 19820707
(43) Veröffentlichungstag der Anmeldung: 17.11.1999
(73) Patentinhaber: Kramb, Günther, 55469 Simmern (DE); Kramb, Jan, 56329 St. Goar-Biebernheim (DE)
(72) Erfinder: Kramb, Günther, 55469 Simmern (DE); Kramb, Jan, 56329 St. Goar-Biebernheim (DE)
(74) Vertreter: Dr. Weitzel & Partner

(56) Entgegenhaltungen:
- EP-A- 0 313 086
- EP-A- 0 392 545
- DE-A- 19 615 065
- DE-C- 4 414 488

## Beschreibung

Die Erfindung betrifft eine Emulgiervorrichtung zum Emulgieren von Medien, die normalerweise nicht miteinander mischbar sind. Dabei kommen insbesondere Wasser und Öl in Betracht Emulgiervorrichtungen dieser Art sind beispielsweise bekanntgeworden aus EP-A-0 313 086, DE 39 12 344 A1 und DE 41 39 782 C2.

Es sind Vorrichtungen bekanntgeworden, mit denen sich hieraus eine Emulsion herstellen läßt, die auch eine gewisse Dauerhaftigkeit (Standzeit) aufweist. Derartige Emulsionen erbringen in Verbrennungsmotoren große Vorteile. Sie sind in der Lage, die Kraftstoff-Ausbeute und damit den Wirkungsgrad des Verbrennungsmotors zu steigern, aber auch das Maß der Schadstoffe in den Emissionen zu verringern.

Ein ganz entscheidender Vorteil der Verwendung von Dieselkraftstoff-Wasser-Emulsionen liegt in der Verringerung der Stickoxide sowie der Rußemissionen. Außerdem besteht aufgrund der Rußverringerung die Möglichkeit, die Funktion des Oxidationskatalysators zu verbessern.

Ganz allgemein sind an Emulgiervorrichtungen der eingangs genannten Art die folgenden Anforderungen gestellt:
die zum Herstellen der Emulsion erforderliche Verwirbelung sollte ohne Zuhilfenahme mechanischer (rotierender) Elemente vonstatten gehen;
eine Schaumbildung sollte vermieden werden;
die Emulsion sollte dort erzeugt werden, wo sie tatsächlich benötigt wird, d. h. möglichst unmittelbar im Bereich der Einspritzpumpe;
die Menge der Emulsion sollte dem Verbrauch des Motors anpaßbar sein;
die Emulsion sollte entsprechend der Motorleistung fett oder mager sein, wobei es vor allem erforderlich ist, den Wassergehalt entsprechend den jeweiligen Betriebsbedingungen in feinfühliger Weise zu steuern;
der bauliche Aufwand der Vorrichtung sollte möglichst gering gehalten werden, um die Herstellungskosten klein zu halten.

Diese Anforderungen werden von bekannten Emulgiervorrichtungen nur ungenügend erfüllt. Insbesondere haben die bekannten Geräte zum Erzeugen der Verwirbelung rotierende Teile in der Reaktionskammer. Deshalb läßt sich eine Schaumbildung nicht vermeiden. Diese ist jedoch besonders nachteilig, weil hierdurch der Flammpunkt erhöht und damit die Selbstzündung verzögert wird.

Außerdem ist das Volumen der mit bekannten Vorrichtungen erzeugten Emulsion relativ groß, was bei häufigem Wechsel der Lastbereiche zu Ungenauigkeiten der dosierten Menge führt Schließlich muß die benötigte Menge an Emulgat auf Vorrat erzeugt werden.

Der Erfindung liegt die Aufgabe zugrunde, eine Emulgiervorrichtung zu gestalten, daß die Vermischung von Dieselkraftstoff und Wasser so perfekt wie möglich wird, wobei insbesondere die Tropfengröße verringert werden soll, jegliche Schaumbildung unterbleibt, jegliche sich bewegende Einbauten vermieden werden und der konstruktive Aufbau und damit auch die Herstellungskosten gegenüber bekannten Vorrichtungen verringert werden. Insbesondere soll die Baugröße der Emulgiervorrichtung gegenüber bekannten Vorrichtungen verkleinert werden.

Diese Aufgabe wird durch die Merkmale vom Anspruch 1 gelöst.

Der Erfinder hat dabei die folgenden Grundgedanken verfolgt: Er hat sich zunächst mit dem grundsätzlichen Aufbau der Emulgiervorrichtung befaßt mit dem Bemühen, deren Geometrie zu verbessern, um den Emulgierprozeß zu optimieren.

Er hat sich weiterhin um eine kompakte Bauweise durch modularen Aufbau bemüht.

Schließlich hat er die zugehörenden Schaltung einer solchen Emulgiervorrichtung derart optimiert, daß sie zur Lösung der Aufgabe beiträgt.

Die Erfindung ist anhand der Zeichnungen näher erläutert. Darin ist im einzelnen folgendes dargestellt
Fig. 1 zeigt eine Schnittansicht durch ein Emulgier-Modul.
Fig. 2 zeigt eine Draufsicht auf das Emulgier-Modul gemäß Fig. 1.
Fig. 3 veranschaulicht die Anordnung der Einspritzdüsen.
Fig. 4 und 5 zeigen den oberen und den unteren Reaktionskammerkörper des Moduls.

Die Figuren 6 bis 11 veranschaulichen eine weitere Ausführungsform eines Emulgier-Moduls. Dabei entsprechen die Figuren 6 bis 10 den Figuren 1 bis 5, während Fig. 11 eine Einzelheit darstellt.

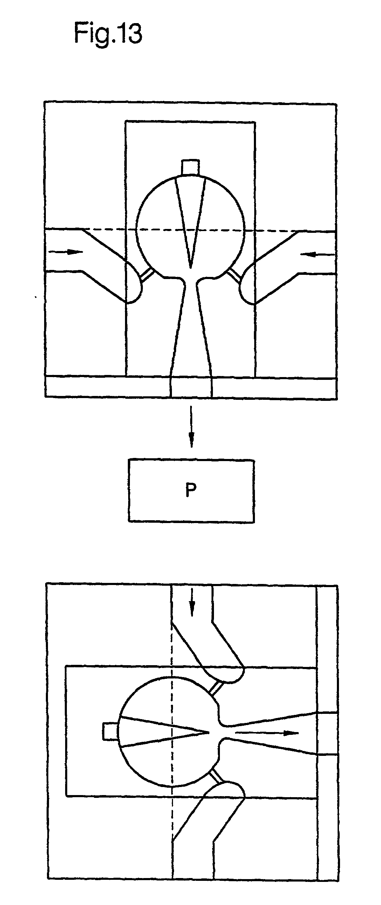

Die Figuren 12 bis 14 veranschaulichen Möglichkeiten von modularen Aufbauten.

Fig. 15 zeigt ein Modul in perspektivischer Darstellung.

Die Figuren 16 und 17 sind Schaltbilder von Emulgieranlagen.

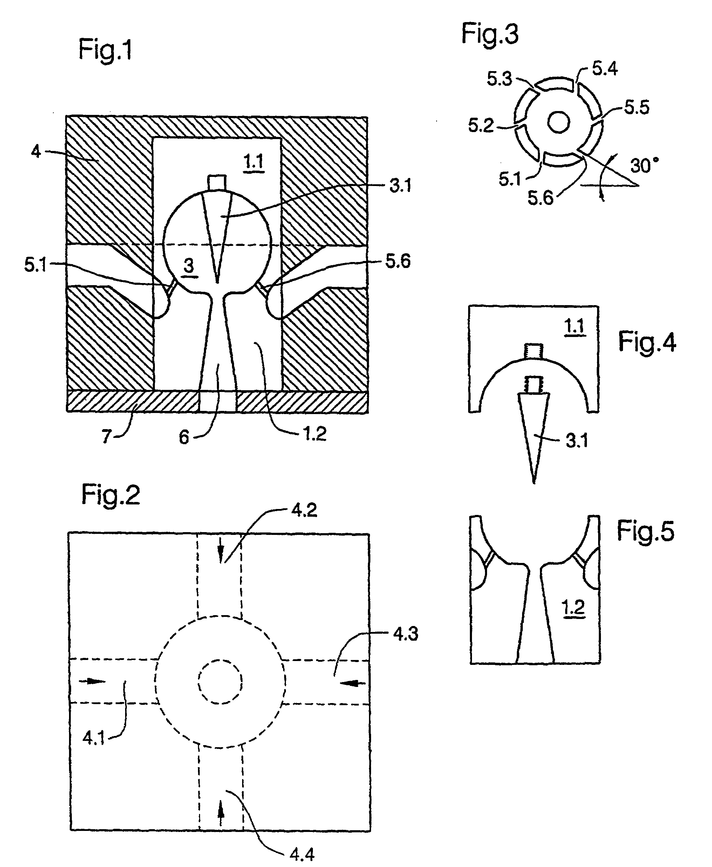

Das in den Figuren 1 bis 5 dargestellte Modul 1 umfaßt zwei Reaktionskammerkörper 1.1 und 1.2. Diese umschließen eine Reaktionskammer 3. Diese hat im vorliegenden Falle Kugelform. Die beiden Reaktionskammerkörper 1.1 und 1.2 sind in einem Gehäuse 4 angeordnet. Die Reaktionskammer 3 wird gespeist von einem Gemisch aus Diesekraftstoff und Wasser. Dies wird über Zufuhrkanäle 4.1, 4.2, 4.3 und 4.4 zugeführt.

Fig. 3 läßt erkennen, daß der Reaktionskammer 3 Ringdüsen 5.1, 5.2 usw. bis 5.6 vorgeschalten sind. Von denen in Fig. 1 nur die Ringdüsen 5.1 und 5.6 erkennbar sind.

Die Düsen sind unter einem gewissen Winkel in Bezug auf den Mittelpunkt der kugelligen Reaktionskammer 3 angeordnet. Im vorliegenden Falle verläuft beispielsweise die Ringdüse 5.6 unter einem Winkel von 30° zur Horizontalen. Die anderen Düsen sind unter einem entsprechenden Winkel angeordnet Auch andere Winkel wären denkbar. Auch ist es möglich, die einzelnen Düsen unter verschieden großen Winkeln anzuordnen.

In die Reaktionskammer 3 ragt ein Dom 3.1 hinein. Dieser ist am oberen Reaktionskammerkörper 1.1 befestigt. Im vorliegenden Falle ist er in diesen eingeschraubt - siehe Fig. 4. Dom 3.1 hat die Form eines extrem spitzen Kegels. Über ihn soll später noch etwas ausgesagt werden.

Während Teilströme des genannten Gemisches über die Kanäle 4.1 bis 4.4 in die Reaktionskammer 3 eintreten, verläßt ein Emulgatstrom die Reaktionskammer 3 durch einen Auslaß 6. Dieser hat im vorliegenden Falle die Gestalt einer Venturidüse. Im Bereich des Austritts 6 ist das Modul mit einem Deckel 7 versehen, der eine Bohrung entsprechend dem Auslaß 6 aufweist.

Der Dorn 3.1 kann je nach den Umständen unterschiedlich lang und auch unterschiedlich dick sein. Im vorliegenden Falle reicht er bis an das Mundstück des Auslasses heran. Er braucht sich jedoch auch nur bis zum Zentrum der kugelligen Reaktionskammer zu erstrecken, oder noch kürzer zu sein.

Durch die Ringdüsen 5.1 bis 5.6 gemäß Fig. 3 kann sowohl ein Gemisch aus Wasser und Kraftstoff in die Reaktionskammer 3 eingeleitet werden. Stattdessen können aber auch Wasser und Kraftstoff separat eingeleitet werden, von einem vorgeschalteten Dosiergerät bereits dosiert.

Der zentrale Führungsdorn 3.1 fördert die Rotation und den geregelten Ablauf des gesamten Vorganges. Die rotierende Masse erreicht im unteren Teil der Reaktionskammer kurz vor dem Eintritt in den venturiartig gestalteten Auslaß 6 ihren höchsten Druck, und sodann in der Venturidüse 6 selbst ihre höchste Geschwindigkeit bei gleichzeitigem Druckabfall. Der Druckabfall dient der Konsolidierung des Emulsionszustandes.

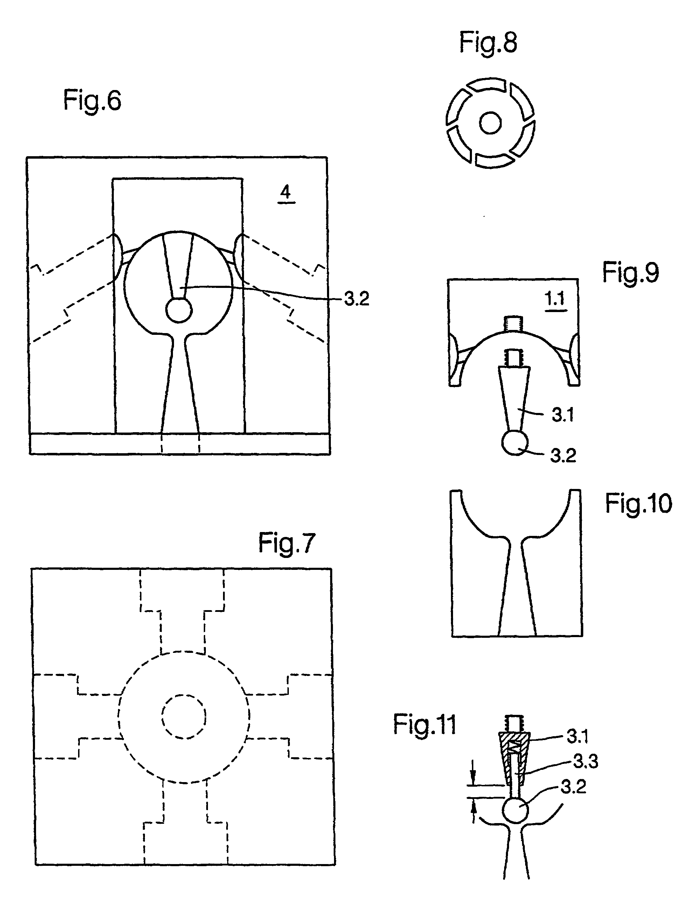

Bei der zweiten Ausführungsform gemäß der Figuren 8 bis 11 weist der Dorn 3.1 an seinem Ende eine kleine Kugel 3.2 auf.

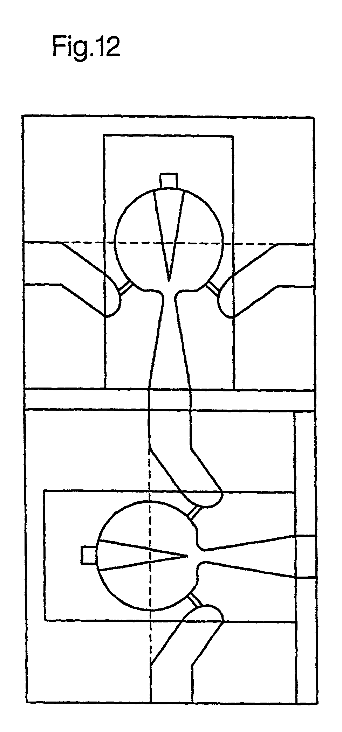

Eine besonders interessante Ausführungsform ist in Fig. 11 dargestellt. Dabei trägt der Dorn 3.1 in seinem Inneren einen Schaft 3.3, und dieser wiederum trägt an seinem unteren Ende die Kugel 3.2. Schaft 3.3 ist aus dem Dorn 3.1 um ein gewisses Maß - in vorliegendem Falle um 3 mm - ausfahrbar. Die kleine Kugel 3.2 wirkt somit als Überströmventil.

Die Ausführungsform des Dornes 3.1 mit der kleinen Kugel 3.2 ist besonders für große Volumina und große Baugrößen geeignet

Die Ausführungsform mit dem ein- und ausfahrbaren Schaft 3.3 mit der kleinen Kugel 3.2 ist besonders geeignet bei wechselnden Lasten, somit bei stark schwankenden Durchflußgeschwindigkeiten.

Wie man aus Fig. 12 erkennt, lassen sich bei entsprechender Gestaltung der Module zwei oder mehrere solcher Module unmittelbar aneinander fügen, so daß eine kompakte Baueinheit entsteht.

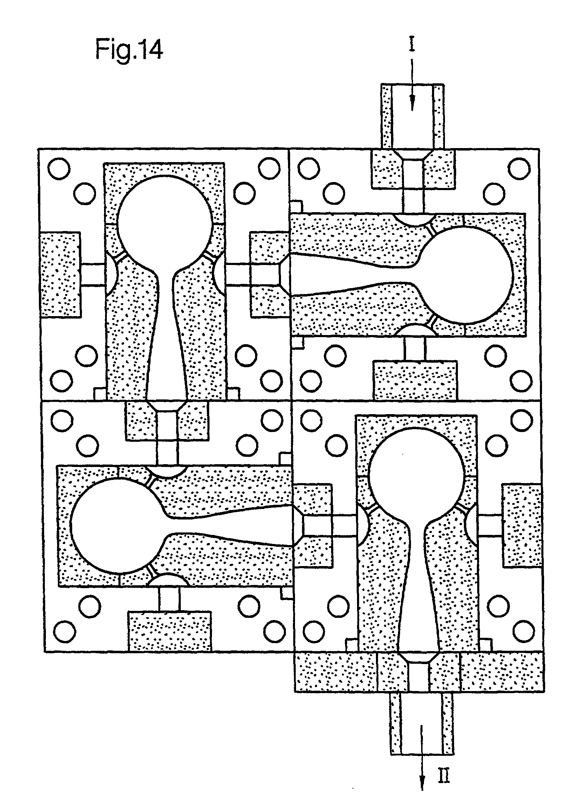

Eine solche Baueinheit ist besonders gut aus Fig. 14 erkennbar. Dort sind vier Module zusammengeschaltet Wie man sieht, sind dabei die Reaktionskammern kugelig.

Diese Zusammenfügung von Einzelmodulen führt zu einer Stufenschaltung, und damit zu einem besonders hochwertigen Emulgat. Man erkennt den Eintritt I des Gemisches und den Austritt des Emulgats.

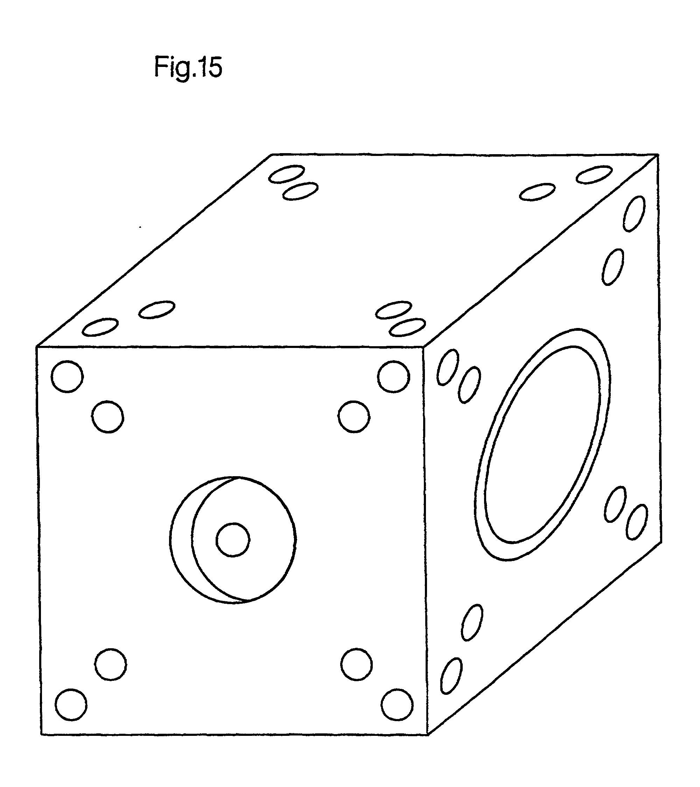

Fig. 15 zeigt in einer gegenüber Fig. 14 vergrößerten Darstellung ein einzelnes Modul.

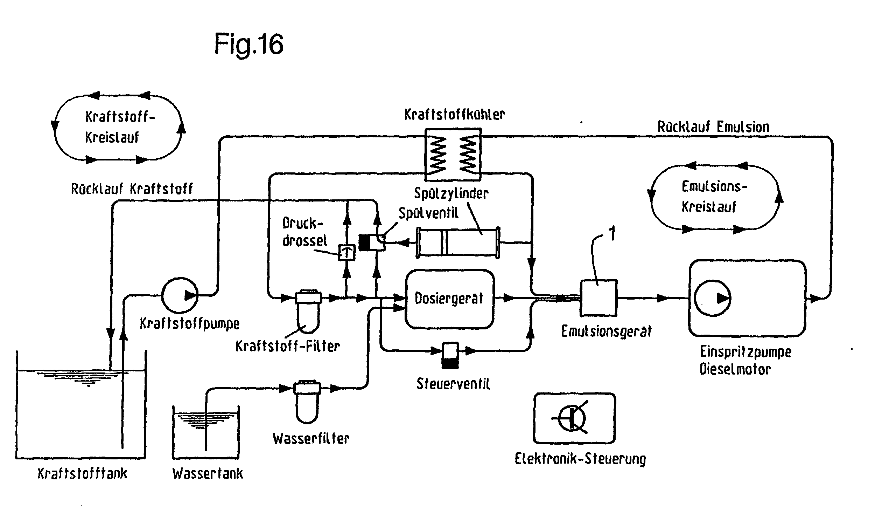

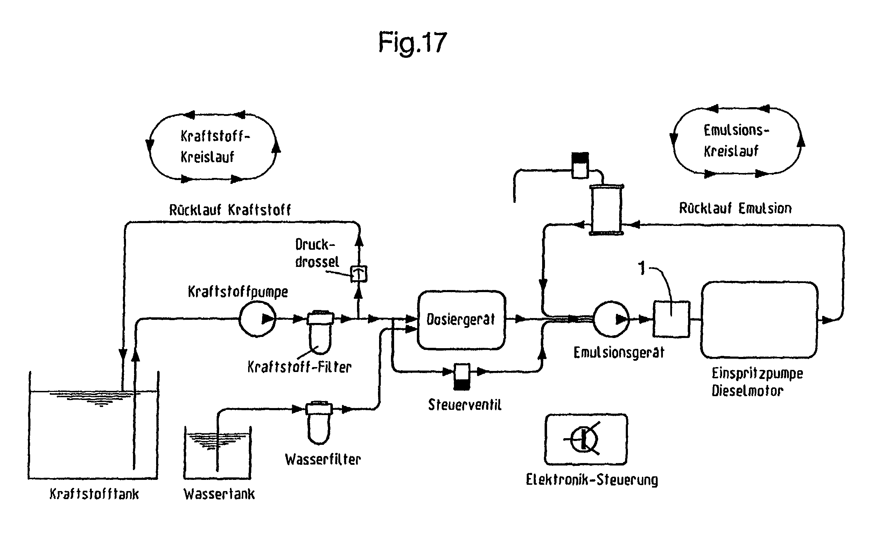

Die Figuren 16 und 17 veranschaulichen die Schaltung einer Emulgieranlage, und zwar einmal für den mobilen Einsatz (Fig. 16), und einmal für den stationären Einsatz (Fig. 17).

## Patentansprüche

1. Emulgiervorrichtung (1) zum Emulgieren von zwei Substanzen, die normalerweise keine Mischung miteinander eingehen, insbesondere von Öl und Wasser;
1.1 mit einem Gehäuse (1.1, 1.2), das eine Reaktionskammer (3) umschließt;
1.2 die Reaktionskammer (3) weist Einlässe (5.1 bis 5.6) für die beiden Medien auf;
1.3 die Reaktionskammer (3) weist einen Auslaß (6) für das Emulgat auf;
1.4 die Reaktionskammer (3) ist von kugeliger oder ellipsoider Gestalt; gekennzeichnet durch das folgende Merkmal :
1.5 es ist ein Dorn (3.1) vorgesehen, der von der Innenfläche der Reaktionskammer ausgehend in diese hineinragt;
1.6 der Dorn (3.1) ist dem Auslaß (6) gegenüberliegend angeordnet;
1.7 der Dorn (3.1) hat die Gestalt eines Spitzkegels, und er ist derart dimensioniert, daß er die Rotation und den geregelten ablauf des gesamten Vorganges fördert.

2. Vorrichtung nach Anspruch 1, dadurch gekennzeichnet, daß Dorn (3.1) und Auslaß (6) miteinander fluchten.

3. Vorrichtung nach Anspruch 1 oder 2, dadurch gekennzeichnet, daß der Dorn an seinem freien Ende eine Kugel (3.2) aufweist.

4. Emulgiervorrichtung zum Emulgieren von zwei Medien, die sich normalerweise nicht miteinander mischen, insbesondere von Öl und von Wasser, nach Anspruch 1 gekennzeichnet durch das folgende Merkmal :
4.1 die Einlässe (5.1 bis 5.6) und der Auslaß (6) sind derart gestaltet angeordnet, daß eine Mehrzahl von Emulgiervorrichtungen modulartig zusammenfügbar sind.

5. Emulgieranlage mit wenigstens einer Emulgiervorrichtung, nach einem oder mehreren der Ansprüche 1 bis 4, gekennzeichnet durch die folgenden Merkmale:
5.1 die Anlage umfaßt zwei Kreisläufe, nämlich einen Kraftstoffkreislauf und einen Emultionskreislauf;
5.2 der Kraftstoffkreislauf umfaßt unter anderem eine Kraftstoffpumpe sowie ein Drosselventil;
5.3 der Emultionskreislauf umfaßt unter anderem eine Emulgiervorrichtung;
5.4 die Anlage umfaßt ein Dosiergeräte zum Zusammenführen von Kraftstoff und Wasser.

6. Anlage nach Anspruch 5, dadurch gekennzeichnet, daß überschüssiges Emulgat aus einer einem Dieselmotor zugeordneten Einspritzpumpe im Kreislauf rückgeführt wird.

## Claims

1. An emulsifying apparatus (1) for emulsifying two substances which usually do not enter into any mixture with one another, in particular oil and water;
1.1 with a housing (1.1, 1.2) which encloses the reaction chamber (3);
1.2 the reaction chamber (3) is provided with inlets (5.1 to 5.6) for the two media;
1.3 the reaction chamber (3) is provided with an outlet (6) for the emulsion;
1.4 the reaction chamber (3) is of spherical or ellipsoid shape;
characterized by the following feature:
1.5 a pin (3.1) is provided which starting from the inside surface of the reaction chamber projects into the same;
1.6 the pin (3.1) is arranged opposite of the outlet (6);
1.7 the pin (3.1) has the shape of a pointed cone and is dimensioned such that it promotes the rotation and the controlled progress of the entire process.

2. An apparatus as claimed in claim 1, characterized in that the pin (3.1) and the outlet (6) are in alignment.

3. An apparatus as claimed in claim 1 or 2, characterized in that the pin is provided at its free end with a ball (3.2).

4. An emulsifying apparatus (1) for emulsifying two substances which usually do not enter into any mixture with one another, in particular oil and water, as claimed in claim 1, characterized by the following feature:
4.1 the inlets (5.1 to 5.6) and the outlet (6) are arranged in such a way that a plurality of emulsifying apparatuses can be joined in a modular manner.

5. An emulsifying plant with at least one emulsifying apparatus as claimed in one or several of the claims 1 to 4, characterized by the following features:
5.1 the plant comprises two circulations, namely a fuel circulation and an emulsion circulation;
5.2 the fuel circulation comprises, among other things, a fuel pump and a throttle valve;
5.3 the emulsion circulation comprises, among other things, an emulsifying apparatus;
5.4 the plant comprises a dosing device for joining fuel and water.

6. A plant as claimed in claim 5, characterized in that excessive emulsion is returned from an injection pump in the circulation which is associated with a diesel engine.

## Revendications

1. Dispositif d'émulsification (1) pour l'émulsification de deux substances qui ne se mélangent normalement pas entre elles, en particulier d'huile et d'eau,
1.1 avec un logement (1.1, 1.2) qui renferme une chambre de réaction (3),
1.2 laquelle chambre de réaction (3) présente des entrées (5.1 à 5.6) pour les deux fluides,
1.3 la chambre de réaction présentant une sortie (6) pour la matière émulsionnée,
1.4 la chambre de réaction (3) étant de forme sphérique ou ellipsoïdale,
caractérisé en ce que :
1.5 il est prévu un mandrin (3.1) qui dépasse dans la chambre de réaction à partir de la surface intérieure de celle-ci ;
1.6 le mandrin (3.1) est disposé en face de la sortie (6) ;
1.7 le mandrin (3.1) a la forme d'un cône pointu et est dimensionné de telle sorte qu'il favorise la rotation et le déroulement régulier de tout le processus.

2. Dispositif selon la revendication 1, caractérisé en ce que le mandrin (3.1) et la sortie (6) sont alignés l'un par rapport à l'autre.

3. Dispositif selon la revendication 1 ou 2, caractérisé en ce que le mandrin présente à son extrémité libre une sphère (3.2).

4. Dispositif d'émulsification pour l'émulsification de deux substances qui ne se mélangent normalement pas entre elles, en particulier d'huile et d'eau, caractérisé en ce que
4.1 les entrées (5.1 à 5.6) et la sortie (6) sont conçues et disposées de telle sorte qu'une pluralité de dispositifs d'émulsification puissent être assemblés de façon modulaire.

5. Installation d'émulsification comprenant au moins un dispositif d'émulsification selon l'une ou plusieurs des revendications 1 à 4, caractérisée en ce que :
5.1 l'installation comprend deux circuits, le circuit de carburant et le circuit d'émulsion ;
5.2 le circuit de carburant comprend, entre autres, une pompe à carburant et une vanne d'étranglement ;
5.3 le circuit d'émulsion comprend, entre autres, le dispositif d'émulsification ;
5.4 l'installation comprend un appareil de dosage pour la réunion du combustible et de l'eau.

6. Installation selon la revendication 5, caractérisée en ce que la matière émulsionnée en excès est ramenée dans le circuit à partir d'une pompe d'injection associée à un moteur diesel.
